Europäisches Patentamt

European Patent Office

Office européen des brevets

(19)

(11) Numéro de publication: **0 263 758 B1**

# FASCICULE DE BREVET EUROPEEN

(12)

(45) Date de publication de fascicule du brevet:
**29.05.91**

(51) Int. Cl.⁵: **H01T 19/04**, B29C 59/12

(21) Numéro de dépôt: **87402216.3**

(22) Date de dépôt: **06.10.87**

(54) **Procédé et dispositif de traitement d'un substrat organique par décharge couronne.**

(30) Priorité: **07.10.86 FR 8613919**

(43) Date de publication de la demande:
**13.04.88 Bulletin 88/15**

(45) Mention de la délivrance du brevet:
**29.05.91 Bulletin 91/22**

(84) Etats contractants désignés:
**BE DE ES GB IT**

(56) Documents cités:
**EP-A- 0 055 686**
**US-A- 3 392 705**
**US-A- 3 484 363**
**US-A- 4 241 377**

(73) Titulaire: **REGIE NATIONALE DES USINES RE-NAULT**
**Boîte postale 103 8-10 avenue Emile Zola**
**F-92109 Boulogne-Billancourt(FR)**

Titulaire: **ELECTRICITE DE FRANCE Service National**
**2, rue Louis Murat**
**F-75008 Paris(FR)**

Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Spartacus, Pierre**
**Ecole Supériere d'Electricité Plateau du Moulon**
**F-91190 Gif sur Yvette(FR)**
Inventeur: **Goldmann, Max**
**Ecole Supériere d'Electricité Plateau du Moulon**
**F-91190 Gif sur Yvette(FR)**
Inventeur: **Amouroux, Jacques**
**E.N.S.C.P. Rue Pierre et Marie Curie**
**F-75005 Paris(FR)**

(74) Mandataire: **Saint Martin, René et al**
**Régie Nationale des Usines Renault 8 & 10, avenue Emile Zola**
**F-92109 Boulogne Billancourt(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention se rapporte au traitement d'un substrat organique, plus particulièrement du type polymère polyoléfinique ; ledit traitement est effectué par décharge couronne, à une pression voisine de la pression atmosphérique, dans le but d'augmenter l'adhésivité et la mouillabilité de ces matériaux vis-à-vis d'un revêtement donné, ou d'un adhésif donné, permettant l'assemblage par collage de plusieurs éléments entre eux.

Les polymères auxquels se rapporte l'invention tels que polypropylènes, copolymères polypropylène-polyéthylène, sont de plus en plus utilisés, notamment dans l'industrie automobile. On sait que ces hydrocarbures saturés sont relativement inertes chimiquement et que, de ce fait, il est particulièrement difficile d'y faire adhérer des revêtements divers et plus particulièrement de la peinture, par exemple à base de polyuréthane. On connait déjà l'influence favorable d'un traitement superficiel de tels substrats par décharge couronne en atmosphère gazeuse, modifiant leurs propriétés physico-chimiques par actions mécanique, thermique ou chimique. Un tel type de machine utilisant ce procédé est décrit sur le brevet US-A-4.241377.

Toutefois, on se heurte à une difficulté importante se produisant lorsque le potentiel appliqué par la décharge couronne est supérieur au potentiel de claquage dans l'atmosphère présidant au traitement.

Dans ce cas, un passage à l'arc se produit, dont l'impact sur le substrat organique est destructif et se traduit par des brûlures, des fusions locales, des déformations du matériau, etc...

La présente invention a pour but de pallier l'inconvénient ci-dessus ; elle sera décrite à titre d'exemple non limitatif au regard des figures 1 à 5 ci-jointes, qui se rapportent respectivement :
- la figure 1, à un schéma d'ensemble d'une installation de traitement selon l'invention,
- les figures 2a et 2b, à des vues de détail respectivement en perspective et en coupe d'un support d'électrode selon l'invention,
- la figure 3, à une perspective d'un élément de l'électrode précédente,
- les figures 4 et 5, à des vues en perspective de variantes d'électrodes selon l'invention.

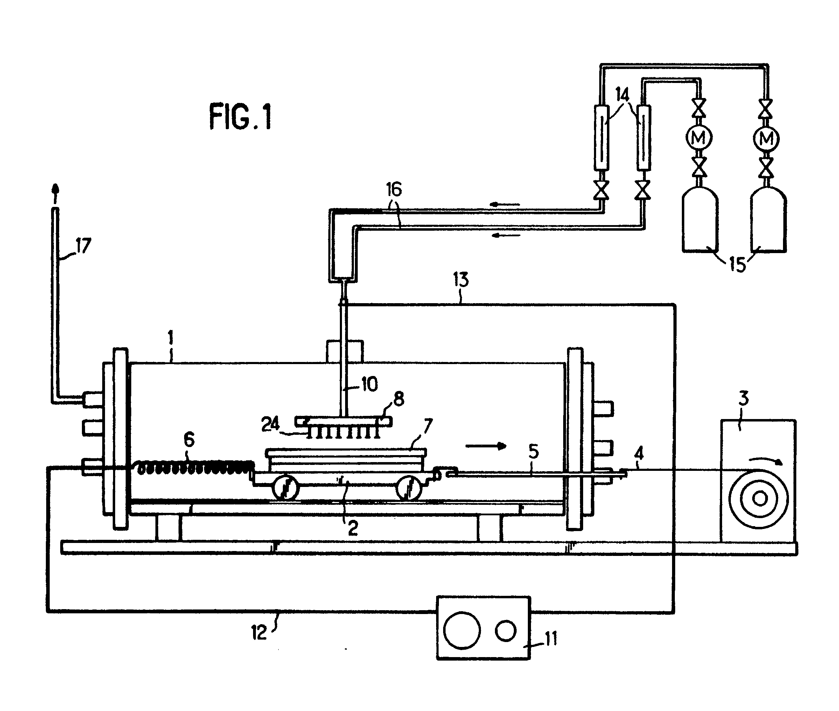

L'installation schématisée à la figure 1 est constituée par une enceinte étanche 1 dans laquelle peut se mouvoir un support 2 soumis à l'action de moyens pouvant être représentés par un moteur électrique 3, un câble 4 et une tige de traction 5 traversant l'enceinte de façon étanche connue en soi et reliée au support 2, lui-même soumis à l'action d'un ressort de rappel 6.

Le substrat organique 7 à traiter repose sur le support 2, pouvant ainsi se déplacer sous le support d'électrode 8 selon l'invention, mobile en hauteur grâce à des tiges de guidage 9 pouvant être des vérins hydrauliques télécommandés fixés à la partie supérieure de l'enceinte 1.

Le support d'électrode 8 comporte une arrivée creuse 10 de courant haute tension et de gaz de traitement, traversant l'enceinte 1 de façon étanche et aboutissant aux moyens appropriés connus en soi situés à l'extérieur de l'installation ; ceux-ci peuvent être figurés par un générateur H.T. 11 et les conducteurs 12, 13 respectivement reliés au support 2 et à la partie extérieure de l'arrivée de courant creuse 10 ; l'atmosphère gazeuse de l'enceinte 1 est contrôlée par des débimètres 14 et des réservoirs 15, via des canalisations 16 ; l'évacuation des gaz et l'abaissement éventuel de la pression interne de l'enceinte 1 sont assurés à travers une canalisation 17.

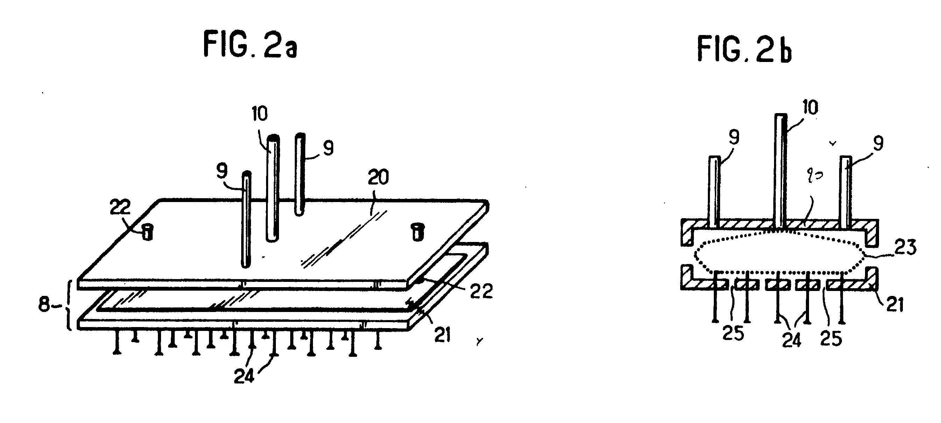

Le support d'électrode 8 est bien visible aux figures 2a et 2b. Il est composé de deux plaques isolantes respectivement supérieure 20 et inférieure 21, séparées par des entretoises 22, et comportent des rebords périphériques constituant ainsi un boîtier incluant une grille de cuivre 23 correspondant au volume interne du boîtier, reliée par sa face supérieure à l'arrivée de courant H.T. 10 et par sa face inférieure à des électrodes 24 ; ces dernières traversent la plaque inférieure 21 pourvue d'orifices 25 pour le passage des gaz de traitement en provenance des canalisations 16 et du conduit 10.

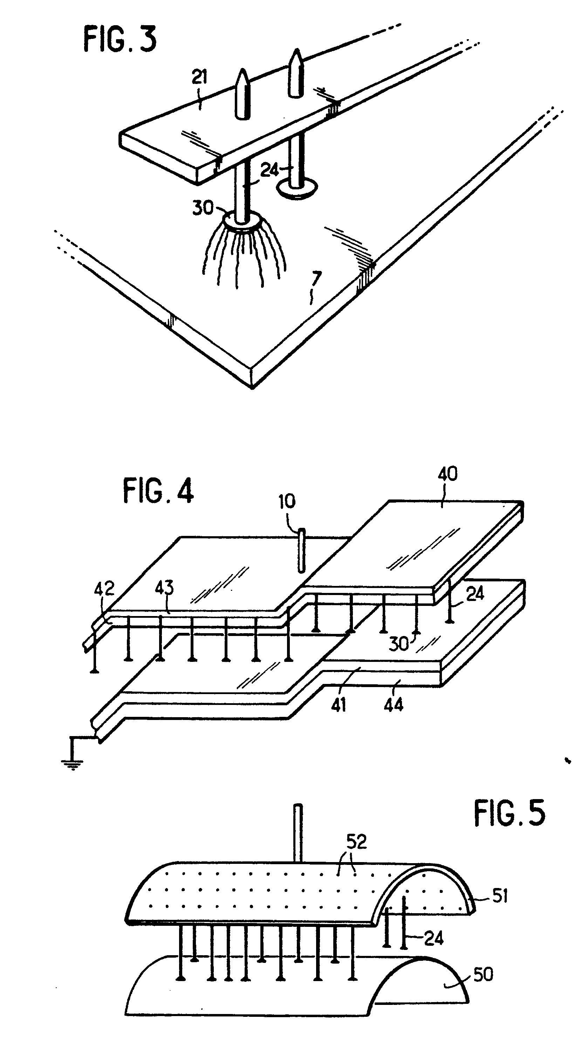

Comme représentée en détail à la figure 3, chaque électrode 24, fixée dans la plaque isolante 21, est constituée d'une tige dont l'extrémité supérieure effilée est réunie à la grille conductrice 23 sous haute tension. Sa partie inférieure 30 est retournée pour former un renflement d'extrémité sensiblement circulaire et se trouve à une distance de l'éprouvette à traiter 7 vers laquelle il est dirigé de l'ordre du centimètre.

Le but de la structure particulière ci-dessus de l'électrode 24 est, pour un potentiel appliqué donné, de répartir l'énergie incidente à laquelle est soumise l'éprouvette 7, en augmentant les lignes de décharges tièdes et en évitant de privilégier l'apparition de décharges en quelques points particuliers ; en effet, le phénomène correspondant favorise le passage à l'arc, destructeur de l'état de surface à traiter. On améliore ce retard du passage à l'arc en injectant simultanément un gaz de traitement, tel que de l'air ou du gaz carbonique, à travers le support d'électrode 8. Les turbulences ainsi engendrées retardent la formation de canaux ioniques générant les arcs.

La décharge obtenue dans les conditions ci-dessus qui donne l'impression d'une décharge diffuse est constituée par un jet tournant parcourant la périphérie retournée de la zone 30 ; les décharges diffuses en résultant donnent lieu, pour une même intensité, à une densité de courant plus faible et plus homogène, ménageant ainsi l'état de surface du substrat 7. Avant d'atteindre les seuils critiques de craquage, on peut utiliser des courants plus importants, puisqu'échauffant moins les gaz, et augmenter ainsi l'efficacité du traitement.

De bons résultats ont été obtenus, à titre d'exemple, dans la fourchette des paramètres suivants : on dispose une éprouvette de polypropylène de 5x10 cm à une distance de 1 cm de l'extrémité inférieure des électrodes 24 et en la traitant pendant 10 à 50 secondes, sous une tension de 5 à 30 KV alternative (70 KHz) et fournissant des impulsions de 3 à 50 MKz. L'évacuation des produits de la décharge se fait par la création, via le conduit 17, d'un vide partiel léger.

La variante de l'invention illustrée à la figure 4 s'applique dans le cas des surfaces à traiter non planes, présentant une dénivellation égale ou supérieure à 2 cm.

Un traitement de surface du support en matière synthétique réalisé par le dispositif précédent ne donnerait pas de bons résultats ; en effet, les décharges issues des électrodes 24 ne seraient pas homogènes au regard des différents plans concernés, mais au contraire seraient le site de nombreux arcs destructeurs.

On utilise alors, selon la figure 4, un support d'électrodes 40 multitraces ou moulantes dont l'enveloppe des points 30 à partir desquels s'établissent les décharges suit le profil du substrat 41 à traiter. Le support 40 éventuellement pourvu d'ouvertures pour le passage des gaz est constitué d'une partie Inférieure 42 isolante et d'une partie supérieure 43 conductrice, sur laquelle aboutit l'arrivée 10 de courant H.T. et se trouve reliée à l'extrémité supérieure de l'ensemble des électrodes 24.

On améliore encore le dispositif ci-dessus en déposant le substrat 41 sur une contre-électrode 44 de forme complémentaire réunie à la terre.

La figure 5 se rapporte à une autre variante de l'invention qui procède de la même idée et qui est adaptée au traitement d'un substrat 50 de forme de révolution. On constate que les électrodes 24 sont positionnées sur un support 51 de forme correspondante, pourvu d'ouvertures 52 destinées au passage des gaz de traitement. Comme précédemment, l'usage d'une contre-électrode, non figurée, est envisageable.

ble d'électrodes (24) et le substrat (7), les électrodes étant fixées à un support d'électrodes (8) pourvu d'ouvertures (25, 52) pour le passage d'un gaz de traitement, caractérisé en ce que les électrodes (24) ont la forme de tiges fixées par leur partie haute effilée au support (8) d'électrodes, que lesdites électrodes (24) sont dirigées et à une distance de l'ordre d'un centimètre du substrat (7), et que leur partie basse qui est dirigée vers le substrat (7) présente un renflement sensiblement circulaire (30) dirigé vers le substrat (7).

2. Dispositif selon la revendication 1, caractérisé en ce que le substrat (7), disposé dans une enceinte étanche (1) pourvue de moyens (10, 17) d'arrivée et d'évacuation de phases gazeuses, et que le support d'électrodes (8) est constitué de deux plaques (20, 21) à rebords périphérique dont l'intérieur forme un porte-électrodes (40), les plaques étant en matériau isolant et déterminant un boîtier qui inclut une grille conductrice (23) de contour fermé, dont la face supérieure est réunie à l'alimentation (10) en haute tension, dont la face inférieure alimente les électrodes (24).

3. Dispositif selon la revendication 1 ou 2, caractérisé en ce que le porte-électrodes (40) est constitué d'un support non conducteur (42) recouvert d'un support conducteur (43), alimenté en courant haute tension qu'il transmet aux électrodes (24) renflées à leur base (30), que ledit porte-électrodes (40) présente une forme, dont l'enveloppe des points (30) à partir desquels s'établissent des décharges suit le profil du substrat (41, 50) à traiter.

4. Dispositif selon la revendication 3, caractérisée en ce que le substrat (41) à traiter repose sur une contre-électrode (44) de forme correspondante reliée à la terre.

5. Procédé pour le traitement d'un substrat organique (7) utilisant le dispositif selon une des revendications de 1 à 4, dans le but d'augmenter sa mouillabilité et son adhésivité, notamment à un dépôt de peinture ultérieure ou à un adhésif donné permettant l'assemblage et le collage de plusieurs éléments entre eux, consistant à créeer des décharges de courant entre les électrodes (24) et le substrat (7).

## Revendications

1. Dispositif de traitement d'un substrat organique (7) par décharges de courant entre un ensem-

## Claims

1. Apparatus for the treatment of an organic substrate (7) by current discharges between an array of electrodes (24) and the substrate (7), the electrodes being fixed to an electrodes support (8) provided with openings (25, 52) for the flow of a treatment gas therethrough, characterised in that the electrodes (24) are in the form of rods which are fixed by means of their upper pointed portion to the electrodes support (8), that said electrodes (24) are directed towards and at a spacing of the order of a centimetre from the substrate (7) and that their lower portion which is directed towards the substrate (7) has a substantially circular enlargement (30) which is directed towards the substrate (7).

2. Apparatus according to claim 1 characterised in that the substrate (7) which is disposed in a sealing enclosure (1) provided with means (10, 17) for the feed and discharge of gaseous phases and that the electrodes support (8) is formed by two plates (20, 21) having peripheral rim portions, the interior of which forms an electrode carrier (40), the plates being of insulating material and defining a casing which includes a conductive grid (23) of closed contour, the upper face of which is connected to the high voltage feed (10) while the lower face thereof feeds the electrodes (24).

3. Apparatus according to claim 1 or claim 2 characterised in that the electrode carrier (40) is formed by a non-conductive support (42) covered by a conductive support (43), supplied with high voltage current which it transmits to the electrodes (24) which are enlarged at their base (30), and that said electrode carrier (40) is of a shape in which the envelope of the points (30) from which discharges occur follows the profile of the substrate (41, 50) to be treated.

4. Apparatus according to claim 3 characterised in that the substrate (41) to be treated rests on a counter-electrode (44) of corresponding shape which is connected to earth.

5. A process for the treatment of an organic substrate (7) using the apparatus according to one of claims 1 to 4 in order to enhance its wettability and its adhesiveness, in particular for a subsequent paint deposit or a given adhesive permitting the assembly and glueing of a plurality of elements to each other, comprising creating current discharges between the electrodes (24) and the substrate (7).

**Ansprüche**

1. Vorrichtung zur Behandlung eines organischen Substrats (7) mittels Stromentladungen zwischen einer Elektrodenanordnung (24) und dem Substrat (7), wobei die Elektroden an einer Elektrodenhalterung (8) befestigt sind, welche mit Öffnungen (25, 52) versehen ist zum Durchlaß eines Behandlungsgases, dadurch gekennzeichnet, daß die Elektroden (24) die Form von Stäben aufweisen, die mit ihren oberen spitzen Abschnitten an der Elektrodenhalterung (8) befestigt sind, daß die Elektroden (24) sich in Richtung zum Substrat (7) hin bis zu einem Abstand in der Größenordnung von einem Zentimeter erstrecken und daß der untere sich in Richtung zum Substrat (7) erstreckende Abschnitt eine im wesentlichen sich kreisförmig erstreckende, dem Substrat (7) zugewandte Wulst (30) aufweist.

2. Vorrichtung nach Anspruch 1, dadurch gekennzeichnet, daß das Substrat (7), welches in einem dichten mit einer Gaseinlaß- und Gasauslaßvorrichtung versehenen Gehäuse (1) angeordnet ist sowie die Elektrodenhalterung (8) aus zwei mit einem Umfangsrand versehenen Platten (20, 21) bestehen, deren Inneres einen Elektrodenträger (40) bildet, wobei die Platten aus isolierendem Material bestehen und einen Kasten bilden, welcher ein leitendes Gitter (23) mit geschlossenem Umfang einschließt, dessen Außenfläche mit einer Hochspannungsversorgung (10) und dessen Innenfläche mit den Elektroden (24) verbunden ist.

3. Vorrichtung nach Anspruch 1 oder 2, dadurch gekennzeichnet, daß der Elektrodenträger (40) aus einer nicht leitenden Halterung (42) besteht, welche mit einer leitenden Halterung (43) bedeckt ist, an welche eine Hochspannung angelegt wird, die den an ihren Enden (30) wulstigen Elektroden (24) zugeführt wird und daß der Elektrodenträger (40) eine Form aufweist, dessen die Spitzen (30), von denen die Entladungen ausgehen, einhüllende Kurve dem Profil des zu behandelnden Substrats (41, 50) folgt.

4. Vorrichtung nach Anspruch 3, dadurch gekennzeichnet, daß das zu behandelnde Substrat (41) auf einer in der Form angepaßten und mit der Erde verbundenen Gegenelektrode (44) ruht.

5. Verfahren zur Behandlung eines organischen Substrats (7) unter Verwendung einer Vorrichtung nach einem der Ansprüche 1 bis 4, im Hinblick auf die Erhöhung seiner Benetzbarkeit und seiner Adhäsionskraft, insbesondere im Hinblick auf einen anschließenden Farbniederschlag oder einen gegebenen Klebstoffauftrag, um so den Zusammenbau und das Verkleben von verschiedenen Bauelementen miteinander zu ermöglichen, wobei Stromentladungen zwischen Elektroden (24) und dem Substrat (7) erzeugt werden.

FIG.1

EP 0 263 758 B1

# FIG. 2a

# FIG. 2b

EP 0 263 758 B1

FIG. 3

FIG. 4

FIG. 5